# EUROPÄISCHE PATENTANMELDUNG

(11) **EP 4 789 788 A1**
(43) Veröffentlichungstag der Anmeldung: **12.08.2026**
(21) Anmeldenummer: 26156307.6
(22) Anmeldetag: 04.02.2026
(51) Int. Cl.: B21B 1/24

(54) **VERFAHREN ZUM HERSTELLEN EINER DRESSIERWALZE, DRESSIERWALZE SOWIE VERFAHREN ZUM DRESSIEREN EINES SCHMELZTAUCHBESCHICHTETEN STAHLBANDS**

(30) Priorität: 11.02.2025 DE 102025104920
(71) Anmelder: ThyssenKrupp Steel Europe AG, 47166 Duisburg (DE)
(72) Erfinder: Lauer, Benjamin, 47166 Duisburg (DE); Junge, Fabian, 47166 Duisburg (DE); Wischmann, Stefan, 47166 Duisburg (DE)
(74) Vertreter: ThyssenKrupp Steel Europe AG

(57) **Zusammenfassung**

Die Erfindung betrifft ein Verfahren zum Herstellen einer Dressierwalze, eine Dressierwalze sowie ein Verfahren zum Dressieren eines schmelztauchbeschichteten Stahlbands.

## Beschreibung

Die Erfindung betrifft ein Verfahren zum Herstellen einer Dressierwalze, eine Dressierwalze sowie ein Verfahren zum Dressieren eines schmelztauchbeschichteten Stahlbands.

Im Stand der Technik werden für die Stahlproduktion Walzen mit einer EDT-Oberfläche eingesetzt, welche stochastische Strukturen aufweisen, um die Oberflächeneigenschafen der Stahlfeinbleche einzustellen. Hierbei sind die arithmetische Mittenrauheit Ra und Spitzenzahl RPc gekoppelt. Eine höhere arithmetische Mittenrauheit führt zu einer geringeren Spitzenzahl. Dies steht im Widerspruch zu den allgemeinen Anforderungen der Automobilbauer. Hierdurch ist der nutzbare Parameterraum deutlich eingeschränkt.

Durch nicht-stochastische sogenannte deterministische Strukturen, welche insbesondere durch Lasertexturierung in die Walzen eingebracht werden können, können diese Parameter frei eingestellt werden. Deterministische Strukturen haben den Nachteil, dass sie empfindlich auf optische Störungen bzw. Oberflächenfehler reagieren. Geringste Änderungen in einem regelmäßigen Muster (deterministische Struktur) werden vom menschlichen Auge als Fehler und störend wahrgenommen. Bei einer zufälligen Verteilungen z.B. Rauschen können solche Fehler nicht wahrgenommen werden.

Verfahren zum Herstellen von lasertexturierten Walzen, insbesondere mit einer zufälligen (stochastischen) Textur, sind beispielhaft in der EP 2 294 178 B1 und in der JP 2004-106015 A beschrieben.

Aufgabe der vorliegenden Erfindung ist es, ein Verfahren zum Herstellen einer Dressierwalze anzugeben, mit welchem ein Parameterraum umfassend Topografie-Kennwerte wie arithmetische Mittenrauheit Ra und Spitzenzahl RPc deutlich erweitert werden kann. Des Weiteren ist es Aufgabe der vorliegenden Erfindung, eine Dressierwalze und ein Verfahren zum Dressieren eines schmelztauchbeschichteten Stahlbands anzugeben, mit welchem eine vorteilhafte Oberfläche für die Herstellung von Fahrzeugbauteilen bereitgestellt gestellt werden kann.

Diese Aufgabe zum Herstellen einer Dressierwalze wird gelöst durch ein Verfahren mit den Merkmalen des Anspruchs 1, für eine Dressierwalze wird gelöst durch die Merkmale des Anspruchs 7 und zum Dressieren eines schmelztauchbeschichteten Stahlbands wird gelöst durch ein Verfahren mit den Merkmalen des Anspruchs 8. Weiterführende Ausgestaltungen sind in den Unteransprüchen beschrieben.

Die erste Lehre betrifft ein Verfahren zum Herstellen einer Dressierwalze, wobei die Dressierwalze in einer Dreheinrichtung eingespannt und mit einer Drehgeschwindigkeit w in Rotation versetzt wird, wobei eine zu bearbeitende Oberfläche der Dressierwalze während der Rotation über mindestens einen Laser oder eine Optik gekoppelt mit einem Laser bearbeitet wird, wobei der Laser mit einer Repetitionsrate f, mit einer maximalen Laserleistung P, mit einem Fokusdurchmesser d und einer Pulsdauer t betrieben wird, um eine stochastische Struktur auf der Oberfläche der Dressierwalze zu erzeugen, wobei der Laser mittels eines Prozessrechners gesteuert und/oder geregelt wird, wobei die zu bearbeitende Oberfläche mittels eines Programms zu einer abgewickelten Fläche in ein Pixelmuster mit n x m Pixel aufgeteilt wird, wobei jedes Pixel des Pixelmusters eine Auflösung bis zu p Stufen bezogen auf eine vorgegebene Tiefe aufweist, wobei das Pixelmuster mit einer normalverteilten Tiefenverteilung und mindestens einer Gaußkurve oder einer gleichverteilten Tiefenverteilung nummerisch generiert wird und das damit generierte Pixelmuster in einem Prozessrechner zur Regelung und/oder Steuerung des Lasers zur Bearbeitung der Oberfläche der Dressierwalze implementiert werden.

Zur Bearbeitung der Oberfläche der Dressierwalze wird die zu bearbeitende Oberfläche respektive die daraus abgewickelte Fläche in ein Pixelmuster aufgeteilt. Jedes Pixel steht für eine Tiefeninformation. Durch diese "Diskretisierung" der Oberfläche wird eine deterministische Oberfläche geschaffen. Die Tiefeninformation der einzelnen Pixel ist insbesondere stochastisch verteilt. So ergibt sich ein Pixelmuster, dass die Nachteile der deterministischen Struktur aufhebt. Beispielsweise können dadurch Topografiewerte wie zum Beispiel die arithmetische Mittenrauheit Ra und die Spitzenzahl RPc gezielt eingestellt werden. Desto höher die Pixel- als auch die Tiefenauflösung, desto näher ist die Oberfläche an einer stochastischen Oberfläche.

Die Bearbeitung mittels Laser ist ein Ablationsprozess. Über die maximale Laserleistung P in Zusammenhang mit dem Fokusdurchmesser d kann die Stärke der Ablation eingestellt werden. Während der Bearbeitung können der Punkt-zu-Punkt-Abstand (Pitch) und der Linienabstand, welcher beispielsweise identisch mit dem Pulsabstand eingestellt werden kann, sowie die Pulsdauer des Lasers konstant gehalten. Durch eine konstante Pulsdauer kann die Komplexität des Systems vorzugsweise gering gehalten werden und ein handelsüblicher gepulster Laser zum Einsatz kommen. Diese Laser weisen typischerweise eine konstante Repetitionsrate auf. Eine Kombination aus Drehgeschwindigkeit w und Repetitionsrate f ergibt einen vorzugsweise konstanten Pitch auf der Oberfläche. Dies unterliegt im Wesentlichen einer natürlichen Schwankung in der Drehgeschwindigkeit der Dressierwalzen und ist für diese Anwendung insbesondere zu vernachlässigen. Der Linienabstand in Achsrichtung ergibt sich durch die Verfahrgeschwindigkeit v des Lasers oder der mit dem Laser gekoppelten Optik. Die Verfahrgeschwindigkeit wird bevorzugt während der Bearbeitung konstant eingestellt. Besonders bevorzugt sind Pitch und Linienabstand gleich.

Es ist bekannt, Zufallsgeneratoren einzusetzen, mit welchen ein zufälliges, sozusagen stochastisches Muster nummerisch generiert werden kann. Entsprechende Programme sind auf dem Markt erhältlich, beispielsweise Matlab. In dem Programm kann eine insbesondere zu bearbeitende Oberfläche einer Dressierwalze in eine abgewickelte Fläche überführt werden und diese in n x m Pixel aufgeteilt werden. Somit wird die Fläche in n Pixel pro Zeile und m Pixel pro Spalte aufgeteilt bzw. unterteilt, mit n und m als ganze Zahlen. n und m können auch gleich sein. Jedes Pixel wird gleich groß gewählt oder kann beispielsweise je nach abgewickelter Fläche respektive Oberfläche variieren. Ein Pixel kann beispielsweise auch eine dreieckige, sechseckige oder andere geometrische Form aufweisen, wobei diese Form insbesondere lückenlos in die abgewickelte Fläche abbildbar ist. Jedes Pixel des Pixelmusters kann vorzugsweise eine rechteckige Form mit einer Seitenlänge zwischen 5 und 50 µm aufweisen. Des Weiteren weist jedes Pixel des Pixelmusters eine Auflösung bis zu p Stufen bezogen auf eine vorgegebene Tiefe auf. p entspricht einer ganzen Zahl und kann bis zu 2¹⁶, beispielsweise bis zu 512 oder 256 (8 bit: 0 bis 255) Stufen betragen. Die Stufen können in ihrer Auflösung ebenfalls eingeschränkt werden, insbesondere bis zu 200 Stufen, vorzugsweise bis zu 150 Stufen, bevorzugt bis zu 128 Stufen, besonders bevorzugt bis zu 64 Stufen, weiter bevorzugt bis zu 32 Stufen. Eine vorgegebene Tiefe entspricht vorzugsweise der tiefsten Stelle, welche vom Laser in der Oberfläche erzeugt wird bzw. werden soll, so dass die maximale oder auch vorgegebene Tiefe zwischen 5 und 50 µm betragen kann, insbesondere maximal 45 µm, vorzugsweise maximal 40 µm, bevorzugt maximal 35 µm, besonders bevorzugt maximal 30 µm. Eine Stufe entspricht somit einer Tiefe von (höchster Stufe)⁻¹ x maximaler bzw. vorgegebener Tiefe. Jedes Pixel steht mithin für eine Tiefeninformation. Die Tiefeninformation der einzelnen Pixel innerhalb des Pixelmusters ist mithin stochastisch verteilt. Das Pixelmuster wird mit einer normalverteilten Tiefenverteilung und mindestens einer Gaußkurve oder einer gleichverteilten Tiefenverteilung nummerisch generiert. Die damit generierten n x m Pixel werden in einem Prozessrechner zur Regelung und/oder Steuerung des Lasers zur Bearbeitung der Oberfläche der Dressierwalze implementiert.

Durch eine gezielte Einstellung der vorgenannten Parameter am Laser mittels der Regelung und/oder Steuerung lassen sich Topografie-Kennwerte wie arithmetische Mittenrauheit Ra und Spitzenzahl RPc auf der Oberfläche der Dressierwalze gezielt bzw. positiv beeinflussen.

Gemäß einer Ausgestaltung kann das Pixelmuster mit einer normalverteilten Tiefenverteilung und mindestens zwei Gaußkurven nummerisch generiert werden. Normalerweise werden in einem Programm jeweils ein Pixelmuster mit einer normalverteilten Tiefenverteilung und einer Gaußkurve nummerisch generiert. Es können beispielsweise mindestens zwei Pixelmuster mit jeweils einer normalverteilten Tiefenverteilung und jeweils einer Gaußkurve nummerisch generiert und diese beiden voneinander unterschiedlichen Pixelmuster kombiniert werden, das heißt beispielsweise, dass die geraden Zahlen der Pixel im Pixelmuster 1 weiterverwertet und die ungeraden Zahlen der Pixel im Pixelmuster 1 verworfen werden und die ungeraden Zahlen der Pixel im Pixelmuster 2 weiterverwertet und die geraden Zahlen der Pixel im Pixelmuster 2 verworfen werden, um aus der Kombination aus Pixelmuster 1 und 2 ein "neues" Pixelmuster zu generieren. Mithin kann durch Kombination aus zwei Pixelmustern durch abwechselndes Zusammenlegen der einzelnen Pixel ein "neues" Pixelmuster erzeugt werden. Vorzugsweise werden Pixelmuster mit einer normalverteilten Tiefenverteilung mit (genau) zwei Gaußkurven nummerisch generiert. Hier kann gezielt Einfluss genommen werden auf die Topografiewerte, und insbesondere höhere Ra, beispielsweise größer als 3,0 µm, vorzugsweise größer als 4,0 µm, bevorzugt größer als 5,0 µm und niedrigere RPc, beispielsweise weniger als 100 1/cm, vorzugsweise weniger als 80 1/cm, bevorzugt weniger als 60 1/cm, eingestellt werden.

Gemäß einer Ausgestaltung kann eine Repetitionsrate f zwischen 10 und 8000 kHz verwendet oder eingestellt wird. Insbesondere kann die Repetitionsrate f zwischen 50 und 2000 kHz betragen.

Gemäß einer Ausgestaltung kann eine maximale Laserleistung P zwischen 10 und 1000 W verwendet oder eingestellt werden. Die maximale Laserleistung kann insbesondere mindestens 15 W, vorzugsweise mindestens 20 W betragen. Die maximale Laserleistung kann insbesondere maximal 700 W, vorzugsweise maximal 300 W betragen. Bevorzugt kann die Pulsenergie variiert werden, um in Abhängigkeit von der maximalen Laserleistung den Abtrag und damit die Tiefe zu regeln.

Gemäß einer Ausgestaltung kann ein Fokusdurchmesser d verwendet oder eingestellt werden, welcher maximal der Pixelgröße entspricht. Weist ein Pixel beispielhaft eine quadratische Form auf mit einer Seitenlänge von 20 µm, so entspricht der Fokusdurchmesser maximal 20 µm. Als Minimum kann der am Laser kleinstmögliche Laserdurchmesser d verwendet respektive eingestellt werden. Der Fokusdurchmesser d kann insbesondere maximal der halben Pixelgröße, vorzugsweise maximal einem Drittel der Pixelgröße, bevorzugt maximal einem Viertel der Pixelgröße entsprechen, wobei entsprechend in jedem Pixel mehrere Pulse angesteuert werden, um einen entsprechenden Abtrag in Abhängigkeit der einzustellenden Tiefe umsetzen zu können.

Gemäß einer Ausgestaltung kann eine Pulsdauer t zwischen 300 fs und 500 ns verwendet oder eingestellt werden.

Ein Abstand L zwischen 20 und 300 mm kann verwendet oder eingestellt werden.

Eine Drehgeschwindigkeit w zwischen 1 und 25 m/s kann verwendet oder eingestellt werden. Die Drehgeschwindigkeit ist typischerweise das Produkt aus Pitch und Repetitionsrate.

Eine Verfahrgeschwindigkeit v ist von der Drehgeschwindigkeit und dem Walzendurchmesser abhängig, sowie insbesondere der Anzahl der Überfahrten, um die gewünschte Tiefe zu erhalten.

Mithin kann der Laser so oft in jedem Pixel angesteuert werden, bis die vorgegebene Tiefe gemäß (tiefen-) Stufe erzielt worden ist. Insbesondere kann der Fokusdurchmesser derart gewählt werden, dass das zu bearbeitende Pixel in einer Ebene mehrmals angesteuert wird und somit ein Abtrag innerhalb eines Pixels sukzessive erfolgen kann.

Die zweite Lehre der Erfindung betrifft eine Dressierwalze mit einer laserbearbeiteten stochastischen Textur auf der Oberfläche, vorzugsweise hergestellt nach der ersten Lehre, wobei die Oberfläche der Dressierwalze eine Topografie mit einer arithmetischen Mittenrauheit Ra zwischen 0,8 und 8,0 µm und mit einer Spitzenzahl RPc zwischen 30 und 250 1/cm, wobei Ra und RPc nach DIN EN 10049:2014-03 ermittelt werden, aufweist.

Die Oberfläche der Dressierwalze kann eine Ra insbesondere von mindestens 0,9, 1,0, 1,1, 1,2 µm, vorzugsweise von mindestens 1,3, 1,4, 1,5 1,6 µm, bevorzugt von mindestens 1,7, 1,8, 1,9, 2,0 µm, besonders bevorzugt von mindestens 2,2, 2,5, 2,7, 3,0 µm, weiter bevorzugt von mindestens 3,5, 4,0, 4,5, 5,0 µm aufweisen.

Die Oberfläche der Dressierwalze kann gemäß einer Ausgestaltung eine RPc von mindestens 30 1/cm und insbesondere maximal 240, 230, 220, 210 1/cm, vorzugsweise maximal 200, 190, 180, 170 1/cm, bevorzugt maximal 160, 150, 140, 130 1/cm, besonders bevorzugt maximal 120, 110, 100, 90 1/cm, weiter bevorzugt maximal 80, 70, 60, 50 1/cm aufweisen.

Die Oberfläche der Dressierwalze kann gemäß einer alternativen Ausgestaltung eine RPc von maximal 250 1/cm und insbesondere mindestens 55, 60, 65, 70 1/cm, vorzugsweise mindestens 75, 80, 85, 90 1/cm, bevorzugt mindestens 95,100, 105, 110 1/cm, besonders bevorzugt mindestens 115, 120, 125, 130 1/cm, weiter bevorzugt mindestens 135, 140, 145, 150 1/cm aufweisen.

Gemäß einer Ausgestaltung kann die Oberfläche der Dressierwalze eine Ra insbesondere von mindestens 0,9, 1,0, 1,1, 1,2 µm, vorzugsweise von mindestens 1,3, 1,4, 1,5 1,6 µm, bevorzugt von mindestens 1,7, 1,8, 1,9, 2,0 µm, besonders bevorzugt von mindestens 2,2, 2,5, 2,7, 3,0 µm, weiter bevorzugt von mindestens 3,5, 4,0, 4,5, 5,0 µm und eine RPc von mindestens 30 1/cm und insbesondere maximal 240, 230, 220, 210 1/cm, vorzugsweise maximal 200, 190, 180, 170 1/cm, bevorzugt maximal 160, 150, 140, 130 1/cm, besonders bevorzugt maximal 120, 110, 100, 90 1/cm, weiter bevorzugt maximal 80, 70, 60, 50 1/cm aufweisen.

Gemäß einer alternativen Ausgestaltung kann die Oberfläche der Dressierwalze eine Ra insbesondere von mindestens 0,9, 1,0, 1,1, 1,2 µm, vorzugsweise von mindestens 1,3, 1,4, 1,5 1,6 µm, bevorzugt von mindestens 1,7, 1,8, 1,9, 2,0 µm, besonders bevorzugt von mindestens 2,2, 2,5, 2,7, 3,0 µm, weiter bevorzugt von mindestens 3,5, 4,0, 4,5, 5,0 µm und eine RPc von maximal 250 1/cm und insbesondere mindestens 55, 60, 65, 70 1/cm, vorzugsweise mindestens 75, 80, 85, 90 1/cm, bevorzugt mindestens 95,100, 105, 110 1/cm, besonders bevorzugt mindestens 115, 120, 125, 130 1/cm, weiter bevorzugt mindestens 135, 140, 145, 150 1/cm aufweisen.

Die dritte Lehre der Erfindung betrifft ein Verfahren zum Dressieren eines schmelztauchbeschichteten Stahlbands, wobei das schmelztauchbeschichtete Stahlband zwischen zwei einen Dressierspalt aufweisende Dressierwalzen mit einer stochastischen Textur hindurchgeführt und dadurch dressiert wird, wobei mindestens eine Dressierwalze nach der zweiten Lehre eingesetzt wird, und insbesondere nach der ersten Lehre hergestellt ist.

Vorzugsweise entsprechen beide Dressierwalzen der zweiten Lehre und sind insbesondere gemäß der ersten Lehre hergestellt.

Um Wiederholungen zu vermeiden, werden auf die Ausführungen zur ersten und zweiten Lehre verwiesen.

Gemäß einer Ausgestaltung umfasst das Stahlblech einen zinkbasierten Überzug. Dabei können im Überzug neben Zink und unvermeidbaren Verunreinigungen zusätzliche Elemente wie Aluminium mit einem Gehalt bis zu 8 Gew.-%, insbesondere bis zu 5 Gew.-% und/oder Magnesium mit einem Gehalt bis zu 8 Gew.-%, insbesondere bis zu 5 Gew.-% in dem Überzug enthalten sein. Stahlbleche mit zinkbasiertem Überzug weisen einen sehr guten kathodischen Korrosionsschutz auf, welche seit Jahren im Automobilbau eingesetzt werden. Ist ein verbesserter Korrosionsschutz vorgesehen, weist der Überzug zusätzlich Magnesium mit einem Gehalt von mindestens 0,3 Gew.-%, insbesondere von mindestens 0,6 Gew.-%, vorzugsweise von mindestens 0,9 Gew.-% auf. Aluminium kann alternativ oder zusätzlich zu Magnesium mit einem Gehalt von mindestens 0,1 Gew.-%, insbesondere von mindestens 0,3 Gew.-% vorhanden sein, um beispielsweise eine Anbindung des Überzugs an das Stahlblech zu verbessern und insbesondere eine Diffusion von Eisen aus dem Stahlblech in den Überzug bei einer Wärmebehandlung des beschichteten Stahlblechs im Wesentlichen zu vermeiden, damit beispielsweise eine gute Klebeignung gewährleistet werden kann. Dabei kann eine Dicke des Überzugs je Seite zwischen 1,5 und 30 µm, insbesondere zwischen 2 und 25 µm, vorzugsweise zwischen 3 und 20 µm betragen. Unterhalb der Mindestgrenze kann kein ausreichender kathodischer Korrosionsschutz gewährleistet werden und oberhalb der Höchstgrenze können Fügeprobleme beim Verbinden des erfindungsgemäßen Stahlblechs respektive eines daraus gefertigten Bauteils mit einem anderen Bauteil auftreten, insbesondere kann bei Überschreiten der Dicke des Überzugs angegebene Höchstgrenze kein stabiler Prozess beim thermischen Fügen bzw. Schweißen sichergestellt werden.

Sind Anteile von Magnesium und Aluminium in dem Überzug neben Zink und unvermeidbaren Verunreinigungen enthalten, ist der Überzug in der Fachwelt als Zink-Magnesium, ZM oder Zn-Al-Mg bekannt.

Bei einer bevorzugten Variante beträgt der Aluminiumgehalt im Überzug 1,1 bis 8 Gew.-%, insbesondere 1,2 bis 5 Gew.-%.

Bei einer bevorzugten Variante beträgt der Magnesiumgehalt im Überzug 1,1 bis 8 Gew.-%, insbesondere 1,2 bis 5 Gew.-%.

Der Überzug kann auch nur Zink mit geringen Aluminiumbestandteilen mit bis zu 0,3 Gew.-% neben unvermeidbaren Verunreinigungen enthalten, mit der Bezeichnung "Z" in Fachkreisen bekannt.

Als unvermeidbare Verunreinigungen können beispielsweise Elemente aus der Gruppe Silizium, Antimon, Blei, Titan, Kalzium, Mangan, Zinn, Lanthan, Cer und Chrom einzeln oder in Kombination mit in Summe bis zu 0,5 Gew.-%, insbesondere bis zu 0,3 Gew.-%, vorzugsweise bis zu 0,1 Gew.-%, bevorzugt bis zu 0,05 Gew.-% im Überzug vorhanden sein.

Das Stahlband besteht aus einem Stahlwerkstoff, welcher neben Eisen und unvermeidbaren Verunreinigungen Legierungselemente wie Kohlenstoff, Silizium, Mangan und Aluminium aufweist, wobei aber auch weitere Bestandteile einzeln oder in Kombination wie zum Beispiel Titan, Chrom enthalten sein können, je nach Verwendung und Festigkeitsklasse ausgewählt werden können. In Fachkreisen ist bekannt, welche Stahlwerkstoffe je nach Verwendung insbesondere für die Herstellung für kaltumgeformte Bauteile im Fahrzeugbau geeignet sind.

Gemäß einer bevorzugten Ausgestaltung ist das Stahlband ein Kaltband. Ein Kaltband ist ein kaltgewalztes Stahlband. Die Herstellung von Kaltbändern ist gängige Praxis.

Die Erfindung umfasst auch beliebige Kombinationen der oben beschriebenen Ausgestaltungen und Alternativen.

Näher erläutert wird die Erfindung anhand der folgenden Ausführungsbeispiele in Verbindung mit der Zeichnung.

Standardgrößen von Dressierwalzen haben eine Breite der Bearbeitungs-Oberfläche zwischen 1200 und 2200 mm und einen Durchmesser zwischen 350 und 650 mm. Somit kann eine beispielhafte zu bearbeitende Oberfläche einer Dressierwalze eine abgewickelte Fläche von 2200 x 1500 mm² aufweisen. Diese Angaben werden im beispielhaften Programm Matlab eingetragen und anhand von Vorgaben oder durch das Programm wird die abgewickelte Fläche in ein Pixelmuster mit n x m Pixel aufgeteilt. Jedes Pixel des Pixelmusters kann vorzugsweise eine rechteckige Form, vorzugsweise eine quadratische Form, mit einer Seitenlänge zwischen 5 und 50 µm und einer Auflösung beispielsweise bis zu 512, insbesondere bis zu 256 Stufen bezogen auf eine vorgegebene Tiefe aufweisen. Das Programm verfügt ebenfalls über Routinen zur Ermittlung von Topografie-Kennwerten, unter Beachtung der Ausführungen der DIN EN 10049:2014-03, so dass Ra und RPc bestimmt werden können.

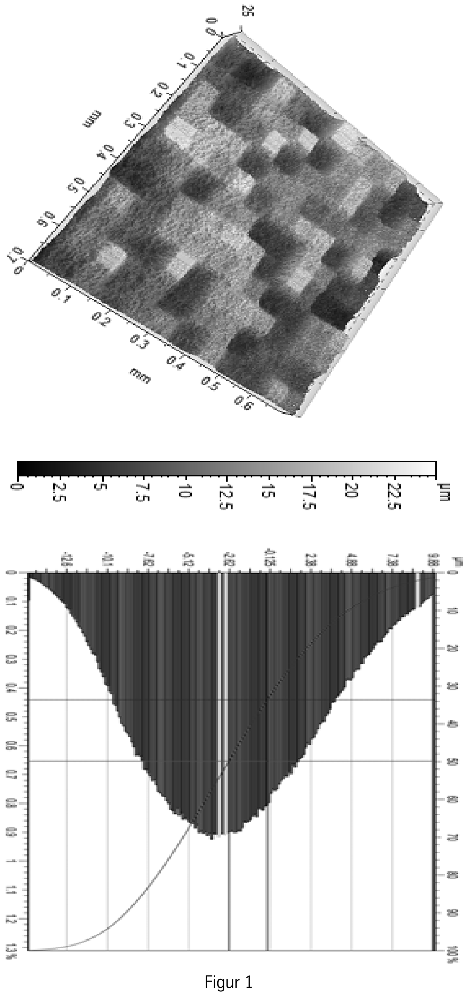

Die **Figuren 1** bis **3** zeigen drei unterschiedliche Teilansichten eines Pixelmusters, welche mit dem Programm Matlab nummerisch generiert wurden. Die für die Figuren 1 bis 3 dargelegten Ergebnisse beziehen sich auf nummerische bzw. simulierte Angaben.

In Figur 1 ist beispielhaft eine Teilansicht eines Pixelmusters mit einer normalverteilten Tiefenverteilung und einer Gaußkurve dargestellt. Die in diesem Fall gezeigte Teilansicht des Pixelmusters entsprach einer quadratischen Form mit einer Fläche von 0,7 x 0,7 mm². Jedes Pixel war quadratisch und wies eine Seitenlänge von 50 µm auf. Es wurde eine Auflösung von 6 Stufen mit einer vorgegebenen Tiefe von 25 µm gewählt. Stufe 6 in der Figur 1 links zeigt den hellsten Punkt (weiß) mit 25 µm auf der Skala und entspricht somit einem unbearbeiteten Bereich auf der Oberfläche der Dressierwalze und Stufe 0 zeigt den dunkelsten Punkt (schwarz) mit 0 µm auf der Skala und entspricht somit einem bearbeiteten Bereich auf der Oberfläche der Dressierwalze mit dem tiefsten Abtrag. Mittels im Programm Matlab hinterlegten Routinen konnten Topografie-Kennwerte Ra = 3,7 µm und RPc = 46 1/cm ermittelt werden.

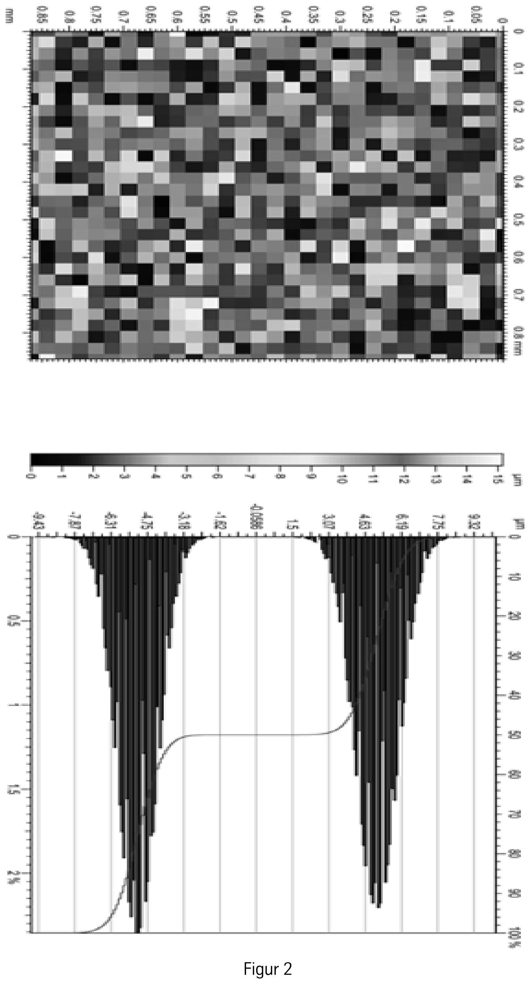

In Figur 2 ist beispielhaft eine Teilansicht eines Pixelmusters mit einer normalverteilten Tiefenverteilung und zwei Gaußkurven dargestellt. Die in diesem Fall gezeigte Teilansicht entsprach einer quadratischen Form mit einer Fläche von 0,9 x 0,9 mm². Jedes Pixel war quadratisch und wies eine Seitenlänge von 30 µm auf. Es wurde eine Auflösung von 256 Stufen mit einer vorgegebenen Tiefe von 15 µm gewählt. Stufe 255 in der Figur 2 links zeigt den hellsten Punkt (weiß) mit 15 µm auf der Skala und entspricht somit einem unbearbeiteten Bereich auf der Oberfläche der Dressierwalze und Stufe 0 zeigt den dunkelsten Punkt (schwarz) mit 0 µm auf der Skala und entspricht somit einem bearbeiteten Bereich auf der Oberfläche der Dressierwalze mit dem tiefsten Abtrag. Mittels im Programm Matlab hinterlegten Routinen konnten Topografie-Kennwerte Ra = 3,08 µm und RPc = 55 1/cm ermittelt werden.

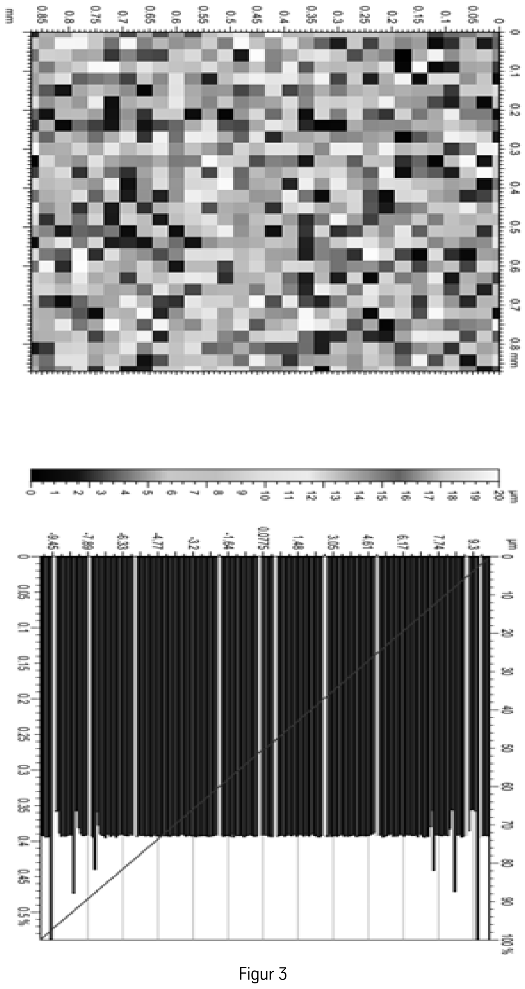

In Figur 3 ist beispielhaft eine Teilansicht eines Pixelmusters mit einer gleichverteilten Tiefenverteilung dargestellt. Die in diesem Fall gezeigte Teilansicht entsprach einer quadratischen Form mit einer Fläche von 0,9 x 0,9 mm². Jedes Pixel war quadratisch und wies eine Seitenlänge von 30 µm auf. Es wurde eine Auflösung von 256 Stufen mit einer vorgegebenen Tiefe von 20 µm gewählt. Stufe 255 in der Figur 3 links zeigt den hellsten Punkt (weiß) mit 20 µm auf der Skala und entspricht somit einem unbearbeiteten Bereich auf der Oberfläche der Dressierwalze und Stufe 0 zeigt den dunkelsten Punkt (schwarz) mit 0 µm auf der Skala und entspricht somit einem bearbeiteten Bereich auf der Oberfläche der Dressierwalze mit dem tiefsten Abtrag. Mittels im Programm Matlab hinterlegten Routinen konnten Topografie-Kennwerte Ra = 3,21 µm und RPc = 51 1/cm ermittelt werden.

Nicht dargestellt, wurden weitere Pixelmuster mit einer normalverteilten Tiefenverteilung und einer Gaußkurve nummerisch generiert. Die in diesen Fällen betrachtete Teilansicht entsprach einer quadratischen Form mit einer Zellenfläche von 0,9 x 0,9 mm². Es wurde eine Auflösung von 256 Stufen mit einer vorgegebenen Tiefe von 20 µm gewählt. Dabei wurden die Seitenlängen der Pixel in quadratischer Form variiert, s. Tabelle 1.

**Tabelle 1**

| Pixelgröße in µm | 10 | 20 | 30 |
|---|---|---|---|
| Ra in µm | 1,06 | 1,08 | 0,9 |
| RPc in 1/cm | 139 | 73 | 36 |

Durch die Vergrößerung der Seitenlänge der Pixel von 10 auf 30 µm kann in diesem Beispiel die Spitzenzahl von 139 1/mm auf 36 1/mm gesenkt werden. Bei 30 µm ist aber schon eine Reduzierung die arithmetische Mittenrauheit festzustellen.

Nicht dargestellt, wurden weitere Pixelmuster mit einer normalverteilten Tiefenverteilung und einer Gaußkurve nummerisch generiert. Die in diesen Fällen betrachtete Teilansicht entsprach einer quadratischen Form mit einer Zellenfläche von 0,9 x 0,9 mm². Es wurde eine Auflösung von 256 Stufen mit einer vorgegebenen Seitenlänge der Pixel in quadratischer Form von 20 µm gewählt. Dabei wurde die Abtragtiefe variiert, s. Tabelle 2.

**Tabelle 2**

| Abtragtiefe in µm | 10 | 20 | 30 |
|---|---|---|---|
| Ra in µm | 0,54 | 1,08 | 1,61 |
| RPc in 1/cm | 45 | 73 | 83 |

Die arithmetische Mittenrauheit kann insbesondere über die maximale Abtragtiefe eingestellt werden. Je größer der maximale Abtrag, desto höher die arithmetische Mittenrauheit. Die Abtragtiefe beeinflusst aber ebenso die Spitzenzahl.

## Patentansprüche

1. Verfahren zum Herstellen einer Dressierwalze, wobei die Dressierwalze in einer Dreheinrichtung eingespannt und mit einer Drehgeschwindigkeit w in Rotation versetzt wird, wobei eine zu bearbeitende Oberfläche der Dressierwalze während der Rotation über mindestens einen Laser oder eine Optik gekoppelt mit einem Laser bearbeitet wird, wobei der Laser mit einer Repetitionsrate f, mit einer maximalen Laserleistung P, mit einem Fokusdurchmesser d und einer Pulsdauer t betrieben wird, um eine stochastische Struktur auf der Oberfläche der Dressierwalze zu erzeugen, wobei der Laser mittels eines Prozessrechners gesteuert und/oder geregelt wird, **dadurch gekennzeichnet, dass** die zu bearbeitende Oberfläche mittels eines Programms zu einer abgewickelten Fläche in ein Pixelmuster mit n x m Pixel aufgeteilt wird, wobei jedes Pixel des Pixelmusters eine Auflösung bis zu p Stufen bezogen auf eine vorgegebene Tiefe aufweist, wobei das Pixelmuster mit einer normalverteilten Tiefenverteilung und mindestens einer Gaußkurve oder einer gleichverteilten Tiefenverteilung nummerisch generiert wird und das damit generierte Pixelmuster in einem Prozessrechner zur Regelung und/oder Steuerung des Lasers zur Bearbeitung der Oberfläche der Dressierwalze implementiert werden.

2. Verfahren nach Anspruch 1, wobei das Pixelmuster mit einer normalverteilten Tiefenverteilung mit mindestens zwei Gaußkurven nummerisch generiert wird.

3. Verfahren nach einem der vorgenannten Ansprüche, wobei eine Repetitionsrate f zwischen 10 und 8000 kHz verwendet oder eingestellt wird.

4. Verfahren nach einem der vorgenannten Ansprüche, wobei eine maximale Laserleistung P zwischen 10 und 1000 W verwendet oder eingestellt wird.

5. Verfahren nach einem der vorgenannten Ansprüche, wobei ein Fokusdurchmesser d verwendet oder eingestellt wird, welcher maximal einer Pixelgröße entspricht.

6. Verfahren nach einem der vorgenannten Ansprüche, wobei eine Pulsdauer t zwischen 300 fs und 500 ns verwendet oder eingestellt wird.

7. Dressierwalze mit einer laserbearbeiteten stochastischen Textur auf der Oberfläche, insbesondere hergestellt nach einem der vorgenannten Ansprüche, **dadurch gekennzeichnet, dass** die Oberfläche der Dressierwalze eine Topografie mit einer arithmetischen Mittenrauheit Ra zwischen 0,8 und 8,0 µm und mit einer Spitzenzahl RPc zwischen 30 und 250 1/cm, wobei Ra und RPc nach DIN EN 10049:2014-03 ermittelt werden, aufweist.

8. Verfahren zum Dressieren eines schmelztauchbeschichteten Stahlbands, wobei das schmelztauchbeschichtete Stahlband zwischen zwei einen Dressierspalt aufweisende Dressierwalzen mit einer stochastischen Textur hindurchgeführt und dadurch dressiert wird, **dadurch gekennzeichnet, dass** mindestens eine Dressierwalze nach Anspruch 7 eingesetzt wird, und insbesondere hergestellt nach einem der Ansprüche 1 bis 6 ist.

9. Verfahren nach Anspruch 8, wobei das schmelztauchbeschichtete Stahlband einen zinkbasierten Überzug umfasst.

10. Verfahren nach Anspruch 8 oder 9, wobei das schmelztauchbeschichtete Stahlband einen Überzug enthaltend neben Zink und unvermeidbaren Verunreinigungen zusätzliche Elemente wie Aluminium und Magnesium jeweils mit einem Gehalt bis zu 8 Gew.-%.

11. Verfahren nach einem der Ansprüche 8 bis 10, wobei das Stahlband ein Kaltband ist.
